(19) Europäisches Patentamt
European Patent Office
Office européen des brevets

(11) **EP 3 938 327 B1**

(12) **FASCICULE DE BREVET EUROPEEN**

(45) Date de publication et mention
de la délivrance du brevet:
**17.12.2025 Bulletin 2025/51**

(21) Numéro de dépôt: **20709193.5**

(22) Date de dépôt: **05.03.2020**

(51) Classification Internationale des Brevets (IPC):
***C03B 37/027*** (2006.01)

(52) Classification Coopérative des Brevets (CPC):
**C03B 37/027; C03B 37/02718; C03B 37/02781;**
C03B 2203/14; C03B 2203/16; C03B 2203/42

(86) Numéro de dépôt international:
**PCT/EP2020/055916**

(87) Numéro de publication internationale:
**WO 2020/187595 (24.09.2020 Gazette 2020/39)**

(54) **PROCÉDÉ ET DISPOSITIF DE FABRICATION D'UNE FIBRE OPTIQUE**

VERFAHREN UND VORRICHTUNG ZUR HERSTELLUNG EINER OPTISCHEN FASER

METHOD AND DEVICE FOR MANUFACTURING AN OPTICAL FIBRE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **15.03.2019 FR 1902656**

(43) Date de publication de la demande:
**19.01.2022 Bulletin 2022/03**

(73) Titulaires:
• **Université de Limoges
87000 Limoges (FR)**
• **Centre national de la recherche scientifique
75016 Paris (FR)**

(72) Inventeur: **BENABID, Fetah
87410 LE PALAIS-SUR-VIENNE (FR)**

(74) Mandataire: **IPAZ
Bâtiment Platon
Parc Les Algorithmes
91190 Saint-Aubin (FR)**

(56) Documents cités:
**EP-A1- 0 649 007     EP-A2- 1 319 636
GB-A- 2 213 142     US-A- 5 992 181**

• **ROBERTS P J ET AL: "ultimate low loss of
hollow-core photonic crystal fibres", OPTICS
EXPRESS, OSA PUBLISHING, US, vol. 13, no. 1,
10 January 2005 (2005-01-10), pages 236 - 244,
XP002442847, ISSN: 1094-4087, DOI: 10.1364/
OPEX.13.000236**

# EP 3 938 327 B1

## Description

### Domaine technique

La présente invention concerne un procédé de fabrication d'une fibre optique. Elle concerne aussi un dispositif de fabrication d'une fibre optique.

### Etat de la technique antérieure

EP 1 319 636 décrit une fibre optique partiellement diffusante et un procédé de fabrication.

EP 0 649 007 décrit un procédé de fabrication de fibres optiques.

GB 2 213 142 décrit un capteur à base de fibre optique et un procédé de fabrication.

L'article de PJ Roberts et al. paru dans OPTICS EXPRESS 236, 10 janvier 2005, volume 13, n°1, décrit des fibres à cristal photonique à cœur creux.

US 5 992 181 décrit un procédé pour irradier de manière aléatoire un cœur de fibre optique avec un laser.

Aujourd'hui, la limite de la performance de transmission des fibres optiques est fixée par les pertes par diffusion.

La fibre optique à cœur creux a connu un progrès phénoménal depuis sa conception il y a presque 20 ans. Ce progrès se décline par les techniques de sa fabrication et sa performance de transmission ainsi que par les applications qui ont vu le jour suite à sa réalisation et qui couvrent des domaines divers et variés comme les télécommunications, l'optique nonlinéaire, les lasers, le micro-usinage, la physique des atomes froids ou la spectroscopie de haute résolution et les capteurs.

Dans ce contexte, l'état de l'art des pertes de transmission est d'environ 0,1 dB/km à 1550 nm pour les fibres conventionnelles solides et autour de 2 à 10 dB/km pour les fibres creuses suivant le type de fibre et la gamme spectrale.

Le but de la présente invention est de proposer un procédé et un dispositif de fabrication de fibre optique améliorant la performance de transmission desdites fibres et/ou ayant des pertes réduites relativement à l'état de l'art actuel.

### Exposé de l'invention

Cet objectif est atteint avec un procédé de fabrication d'une fibre optique selon la revendication 1.

De préférence, le four élève la température de la préforme et la zone de travail est de préférence située par rapport au four de sorte que la zone de travail de la préforme est en phase viscoélastique.

La fréquence de modulation est de préférence inférieure à 10 kHz.

Chaque faisceau laser est de préférence modulé entre une puissance maximale et une puissance minimale. De préférence, la valeur de puissance minimale est comprise entre 95% de la puissance maximale et 0% de la puissance maximale.

Chaque faisceau laser peut être modulé sur un intervalle allant de la puissance maximale jusqu'à au moins 50% de cette puissance maximale.

Chaque faisceau laser peut être modulé sur un intervalle allant de la puissance maximale jusqu'à au moins 10% de cette puissance maximale.

Chaque faisceau laser est de préférence modulé en puissance selon une fréquence de modulation supérieure à 100Hz.

L'au moins un faisceau laser comprend de préférence plusieurs faisceaux laser se croisant sur la zone de travail.

Chaque faisceau laser a de préférence une longueur d'onde supérieure à 200 nm et/ou inférieure à 12 $\mu$m.

Chaque faisceau laser est de préférence collimaté sur la zone de travail. La préforme est de préférence une préforme en verre.

La zone de travail de la préforme étirée comprend de préférence une structure composée de parois dont l'épaisseur est inférieure à 10$\mu$m, de préférence inférieure à 3 $\mu$m, de préférence inférieure à 1 $\mu$m.

La zone de travail est de préférence située en dehors du four.

Le four comprend de préférence:

- une enceinte traversée par la préforme, et
- une source de chaleur disposée dans l'enceinte et élevant la température à l'intérieur de l'enceinte, la zone de travail étant située à une distance inférieure à 10 cm de la source de chaleur.

La zone de travail est de préférence à une température supérieure à 700°C, de préférence supérieure à 1000°C, de préférence supérieure à 1500 °C.

Suivant encore un autre aspect de l'invention, il est proposé un dispositif de fabrication d'une fibre optique selon la revendication 15.

La fréquence de modulation est de préférence inférieure à 10 kHz.

Les moyens de modulation sont de préférence agencés pour que chaque faisceau laser est modulé entre une puissance maximale et une puissance minimale. La valeur de puissance minimale est de préférence comprise entre 95% de la puissance maximale et 0% de la puissance maximale.

Les moyens de modulation sont de préférence agencés pour que chaque faisceau laser est modulé sur un intervalle allant de la puissance maximale jusqu'à au moins 50% de cette puissance maximale.

Les moyens de modulation sont de préférence agencés pour que chaque faisceau laser est modulé sur un intervalle allant de la puissance maximale jusqu'à au moins 10% de cette puissance maximale.

Les moyens d'émission sont de préférence agencés pour que l'au moins un faisceau laser comprend plusieurs faisceaux laser se croisant sur la zone de travail.

Les moyens d'émission sont de préférence agencés pour que chaque faisceau laser a une longueur d'onde supérieure à 200 nm et/ou inférieure à 12 $\mu$m.

Les moyens d'émission sont de préférence agencés pour que chaque faisceau laser est collimaté sur la zone de travail.

La zone de travail est de préférence située en dehors du four.

Le four comprend de préférence:

- une enceinte traversée par la préforme, et
- une source de chaleur disposée dans l'enceinte et agencée pour élever la température à l'intérieur de l'enceinte, la zone de travail étant située à une distance inférieure à 10 cm de la source de chaleur.

Les moyens d'émission et le four sont de préférence agencés pour que la zone de travail soit à une température supérieure à 1000°C, de préférence supérieure à 1500 °C.

## Description des figures et modes de réalisation

D'autres avantages et particularités de l'invention apparaîtront à la lecture de la description détaillée de mises en œuvre et de modes de réalisation nullement limitatifs, et des dessins annexés suivants :

**[Fig. 1]** la figure 1 est une vue schématique de coupe de profil d'un premier mode de réalisation de dispositif 101 selon l'invention, dans lequel passe une préforme 1,
**[Fig. 2]** la figure 2 est une vue schématique de coupe de dessus de la préforme 1 au niveau d'une zone de travail 4,
**[Fig. 3]** la figure 3 est une vue schématique de profil de la préforme 1 au niveau de la zone de travail 4,
**[Fig. 4]** la figure 4 est un agrandissement de la partie 10 de la figure 3 et est une vue schématique de coupe de profil d'une paroi 7 de la préforme 1 au niveau de la zone de travail 4 avec (figure 4a) et sans (figure 4b) mise en œuvre d'un procédé selon l'invention,
**[Fig. 5]** la figure 5 est une vue schématique de profil de la préforme 1 au niveau de la zone de travail 4 dans une variante de procédé selon l'invention, et
**[Fig. 6]** la figure 6 est un schéma d'une onde capillaire à l'interface entre un milieu liquide ou viscoélastique et un milieu gazeux.

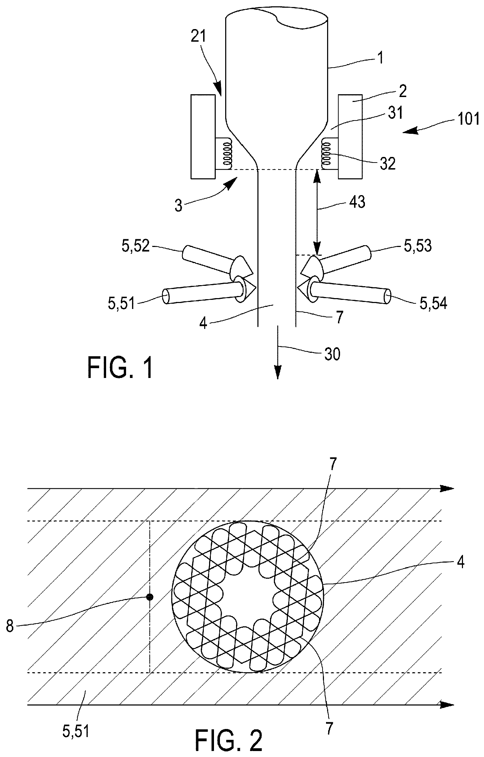

On va tout d'abord décrire, en référence aux figures 1 à 5, un premier mode de réalisation de dispositif 101 de fabrication d'une fibre optique selon l'invention.

Le dispositif 101 comprend un four 2. Le four 2 est par exemple une fournaise pour étirage de fibre chez Nextrom.

Le four 2 comprend une entrée 21 agencée pour insérer une préforme 1 (typiquement une canne de verre) dans le four 2. Le dispositif 101 comprend en outre du côté de l'entrée 21 des moyens de maintien (non illustrés) agencés pour maintenir une première extrémité de la préforme 1 du côté de l'entrée 21. Ces moyens de maintien consistent par exemple en un mandrin posé sur une platine de translation.

Le dispositif 101 comprend des moyens pour étirer la préforme 1 par une sortie 3 du four 2, le long d'une direction d'étirement 30. Ces moyens, non illustrés, comprennent typiquement deux courroies en vis-à-vis disposées du côté de la sortie 3 du four 2, et où la fibre étirée est placée entres les deux courroies pour étirage avec une vitesse ajustable.

L'entrée 21 et la sortie 3 sont situées à deux extrémités opposées du four 2 le long de la direction 30.

Le dispositif 101 comprend des moyens d'émission agencés pour soumettre, après la sortie 3 du four 2, une zone de travail 4 de la préforme 1 ainsi étirée à au moins un faisceau laser 5. Ces moyens d'émission comprennent typiquement une ou plusieurs sources lasers, et éventuellement des moyens optiques complémentaires pour mettre en forme et/ou diviser et/ou regrouper un ou plusieurs de l'au moins un faisceau laser 5.

Les moyens d'émission sont agencés pour que l'au moins un faisceau laser 5 comprend plusieurs faisceaux laser 5 se croisant sur la zone de travail 4.

Les moyens d'émission sont agencés pour que chaque faisceau laser a une longueur d'onde supérieure à 200 nm et/ou inférieure à 12 $\mu$m.

Les moyens d'émission sont agencés pour que chaque faisceau laser a une puissance maximale 6 supérieure à 10 W.

Les moyens d'émission sont agencés pour que chaque faisceau laser soit collimaté sur la zone de travail 4.

Les moyens d'émission sont agencés pour que toute la partie 8 du front d'onde de chaque faisceau laser 5 entrant en contact de la fibre étirée 1 (plus exactement de la zone de travail 4) ait, à chaque instant donné, une densité spatiale de puissance comprise entre un maximum à cet instant t et 80% de ce maximum.

Ainsi, à chaque instant t, chaque faisceau laser 5 a une densité spatiale de puissance sensiblement homogène spatialement sur la fibre étirée 1 (plus exactement sur la zone de travail 4).

Dans l'exemple illustré en figure 1, on utilise quatre sources laser continues de référence YRL de chez IPG et agencées pour émettre quatre faisceaux laser 51, 52, 53, 54.

Le dispositif 101 comprend en outre des moyens de modulation agencés pour moduler chaque faisceau laser 5 en puissance selon une fréquence de modulation. Ces moyens de modulation sont ou bien déjà fournis dans le laser ou par un modulateur d'intensité par voie électrooptique et/ou acousto-optique et/ou par une roue dentée tournante.

La fréquence de modulation est :

- supérieure à 10Hz, de préférence supérieure à 100Hz et
- inférieure à 1000 kHz, de préférence inférieure à 10 kHz.

Ainsi, chaque faisceau laser 5 :

- est spatialement homogène ou sensiblement homogène en densité de puissance à chaque instant t considéré sur la fibre étirée 1 (plus exactement sur la zone de travail 4), c'est-à-dire a sur la fibre étirée 1 (plus exactement sur la zone de travail 4) à chaque instant t considéré une densité spatiale de puissance comprise entre un maximum (spécifique à cet instant t) et 80% de ce maximum,
- mais est temporellement modulé en puissance selon une fréquence de modulation.

Les moyens de modulation sont agencés pour que chaque faisceau laser 5 soit modulé entre la puissance maximale 6 et une puissance minimale de telle façon que la valeur de puissance minimale est comprise entre 95% de la puissance maximale et 0% de la puissance maximale, de préférence entre 95% de la puissance maximale et 10% de la puissance maximale. Plus précisément, les moyens de modulation sont agencés pour que chaque faisceau laser est modulé sur un intervalle 9 allant de la puissance maximale 6 jusqu'à 50% ou moins de cette puissance maximale. Plus précisément, les moyens de modulation sont agencés pour que chaque faisceau laser est modulé sur un intervalle 9 allant de la puissance maximale 6 jusqu'à 10% ou moins de cette puissance maximale.

La zone de travail 4 est située en dehors du four 2.

La zone de travail 4 est située du côté de la sortie 3 du four 2.

Le four 2 comprend :

- une enceinte 31 traversée par la préforme, et
- une source de chaleur 32 disposée dans l'enceinte 31 et agencée pour élever la température à l'intérieur de l'enceinte 31.

La zone de travail 4 est située à une distance 43, mesurée le long de la direction 30, typiquement inférieure à 10 cm de la source de chaleur 32.

La distance entre la zone de travail 4 par laser (ZL) et la zone de chauffe 32 du four thermique (ZF) est agencée pour que la température de la préforme étirée montre une température supérieure à celle de la température de ramollissement de la préforme 1, i.e. de sorte que la préforme 1 soit viscoélastique au niveau de la zone de travail 4. Pour un four thermique opérant à des température entre 1800 et 2000 °C , et pour des vitesses d'étirage de 10 à 100 m/min, cette distance peut être typiquement comprise entre 5 cm et 10 cm.

Chaque faisceau laser 5 est placé de telle façon que la préforme étirée est dans une phase viscoélastique au niveau de la zone de travail 4. Autrement dit, la distance entre le laser et le four (ici four est défini comme la zone de chauffe) doit être suffisamment proche pour que, au niveau de la zone 4, la préforme (i.e. le verre) ne s'est pas encore refroidi au point de solidifier, et suffisamment éloigner du four pour garantir un fonctionnement optimal (c.a.d. distribution et amplitude de température comparable au four standard).

Le four élève la température de la préforme et la zone de travail 4 est située par rapport au four de sorte que la zone de travail de la préforme est en phase viscoélastique.

Chaque laser 5 ne crée pas de défauts de matériaux sur la préforme.

Les moyens d'émission et le four 2 sont agencés, notamment par les positions relatives du four 2 et de l'au moins un faisceau(x) 5, pour que la zone de travail 4 soit à une température supérieure à une température de ramollissement ou de transition vitreuse du matériau composant la préforme 1, de préférence supérieure à 1000°C, de préférence supérieure à 1500 °C.

La température de transition vitreuse est par exemple de :

- 150°C pour du Chalcogenide GeSbTe,
- 245°C pour du Chalcogenide AsGeSeTe,
- 235°C pour du Verre au fluorure ZBLAN,
- 280°C pour du Tellurium dioxide,
- 400°C pour du Fluoroaluminate,
- 1200°C pour du Quartz fondu.

Ainsi, l'invention est un procédé et un dispositif de fournaise opto-thermique permettant la réduction de l'effet de diffusion par l'inhomogénéité de la densité du verre par effet de photo-absorption.

La préforme 1 est trompée dans le four thermique 2 typiquement résistif ou inductif. Une section de la préforme 1 passe d'abord par la zone de chauffe 31 du four 2 et ensuite, par effet d'écoulement, dans la section optique où la section chauffée 4 de la préforme 1 est excitée par l'au moins un faisceau laser 5.

On va maintenant décrire, en référence aux figures 1 à 5, un premier mode de réalisation de procédé selon l'invention mis en œuvre par le dispositif 101.

Dans ce mode de réalisation de procédé de fabrication d'une fibre optique :

- on insère la préforme 1 dans le four 2,
- on étire la préforme 1 par la sortie 3 du four 2, et
- on soumet, après la sortie 3 du four 2, la zone de travail 4 de la préforme 1 ainsi étirée à l'au moins un faisceau laser 5, chaque faisceau laser 5 étant modulé en puissance selon la fréquence de modulation.

La fréquence de modulation est :

- supérieure à 10Hz, de préférence supérieure à 100Hz et
- inférieure à 1000 kHz, de préférence inférieure à 10 kHz.

Chaque faisceau laser 5 est modulé entre la puissance maximale 6 et une puissance minimale de telle façon que la valeur de puissance minimale est comprise entre 95% de la puissance maximale et 0% (ou de préférence 10%) de la puissance maximale. De préférence, chaque faisceau laser est modulé sur un intervalle 9 allant de la puissance maximale 6 jusqu'à 50% ou moins de cette puissance maximale. De préférence chaque faisceau laser 5 est modulé sur un intervalle 9 allant de la puissance maximale 6 jusqu'à 10% ou moins de cette puissance maximale.

L'au moins un faisceau laser 5 comprend plusieurs faisceaux laser 5 se croisant sur la zone de travail 4.

Chaque faisceau laser 5 a une longueur d'onde supérieure à 200 nm et/ou inférieure à 12 $\mu$m.

Chaque faisceau laser 5 a une puissance maximale 6 supérieure à 10 W.

Chaque faisceau laser 5 est collimaté sur la zone de travail 4.

De préférence, l'au moins un faisceau 5 comprend N faisceaux 5 répartis autour de la zone 4 dans un plan perpendiculaire à la direction 30 avec des angles de séparation réguliers de 2n/N (N étant un entier naturel).

Selon la variante considérée, l'au moins un faisceau 5 peut donc comprendre :

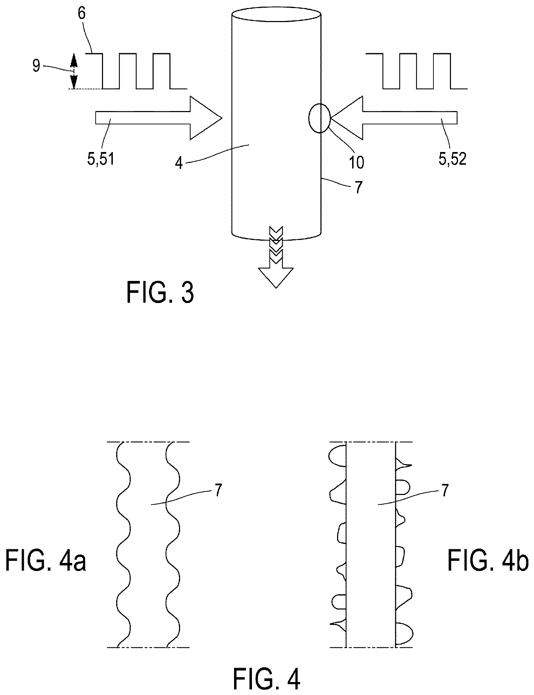

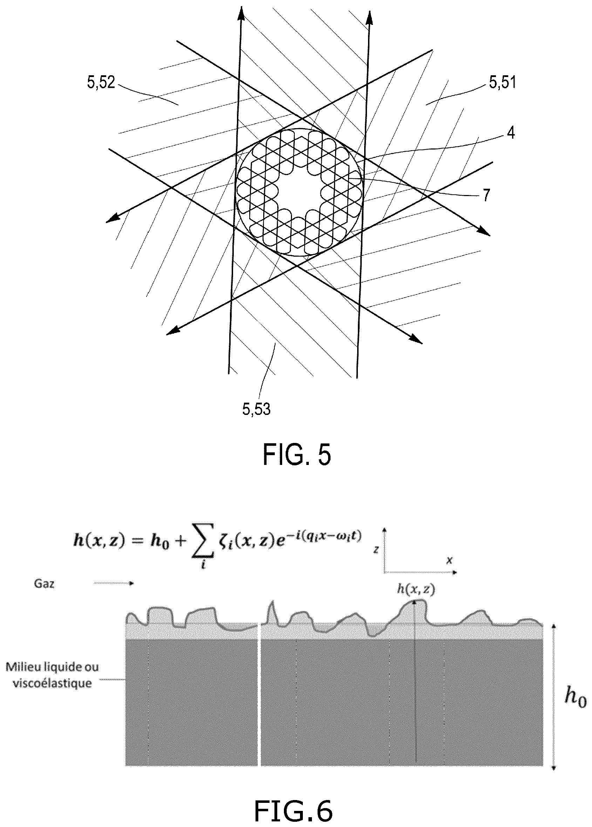

- un seul faisceau 5, 51 (figure 2)
- deux faisceaux 51, 52 (figure 3) de préférence se faisant face
- trois faisceaux 51, 52, 53 (figure 5) de préférence répartis autour de la zone 4 avec des angles réguliers de 2n/3
- quatre faisceaux (figure 1) de préférence répartis autour de la zone 4 avec des angles réguliers de n/2,
- ou encore plus de faisceaux 5, plus le nombre de faisceaux 5 étant grand, meilleure étant l'homogénéité d'illumination de la zone 4.

La préforme 1 est une préforme en verre, par exemple de type silice.

La zone de travail 4 de la préforme étirée 1 est une fibre optique microstructurée.

La zone de travail 4 de la préforme étirée 1 comprend une structure (par exemple de type Kagome) composée uniquement de parois 7 (de verre, illustrées en blanc sur fond noir sur les figures 2 et 5) dont l'épaisseur est inférieure à 10$\mu$m, de préférence inférieure à 3 $\mu$m, de préférence inférieure à 1 $\mu$m.

Toute la partie 8 du front d'onde de chaque faisceau laser 5 entrant en contact de la fibre étirée 1 (plus exactement de la zone de travail 4) a, à chaque instant donné, une densité spatiale de puissance comprise entre un maximum à cet instant t et 80% de ce maximum. Ainsi, à chaque instant t, chaque faisceau laser 5 a une densité spatiale de puissance sensiblement homogène spatialement sur la fibre étirée 1 (plus exactement sur la zone de travail 4).

La zone de travail 4 est située en dehors du four 2, du côté de la sortie 3.

La zone de travail 4 est située à une distance 43 inférieure à 10 cm de la source de chaleur 32.

La zone de travail 4 est à une température supérieure à une température de ramollissement ou de transition vitreuse du matériau composant la préforme 1, de préférence supérieure à 1000°C, de préférence supérieure à 1500 °C.

L'invention permet de limiter la fluctuation de densité locale pour les fibres optiques solides conventionnelles et la rugosité de surface pour les fibres microstructurées à cœur creux, dues à un phénomène hydrodynamique lors de l'étirage de la fibre et qui induisent des pertes par diffusion de lumière et donc une limite de la performance de transmission des fibres optiques.

Pendant la fabrication de la fibre optique, la préforme 1 est insérée dans le four 2 et chauffée à une température telle que le verre subit une transition de phase et devient viscoélastique. Ce verre « liquide » est ensuite étiré en fibre optique. Pendant cette phase liquide, le verre est le lieu d'une fluctuation de masse ou de densité qui peut être présentée comme une composition stochastique d'ondes phononiques. Lors de cet étirage le verre subit une deuxième transition de phase passant du liquide à la phase solide, et les fluctuations citées ci-dessus sont « gelées ». Dans le cas de la fibre solide conventionnelle, ces fluctuations gelées prennent la forme d'inhomogénéités nano-métriques dans la matrice du verre. Ces dernières induisent une diffusion de la lumière guidée et fixent une limite aux pertes de transmission qui est d'environ 0.1 dB/km à 1550 nm et évolue avec la longueur d'onde. Dans le cas des fibres creuses (fibre optique guidant dans un coeur creux), les fluctuations gelées résultent d'ondes surfaciques, appelée ondes capillaires, et prennent la forme d'une rugosité de surface illustrée sur la figure 4.b en cas d'absence de mise en œuvre du procédé selon l'invention, i.e. sans les faisceaux 5. Cette rugosité induit aussi une diffusion de lumière dont l'amplitude est proportionnelle au taux de recouvrement de la lumière dans le cœur avec le contour de verre et à l'amplitude de rugosité de surface. Aujourd'hui, cette diffusion est une limite de l'état de l'art des fibres creuses.

Au contraire, après mise en œuvre de ce procédé selon l'invention, on a comme illustré sur la figure 4.a une réduction de rugosité de surface par modulation de l'indice et de masse relative à une référence de surface, les faisceaux 5 excitant la surface ou la matrice à traiter et modulant ainsi l'indice et/ou la densité par effet de photo-absorption.

Les figures 4.a et 4.b ne sont que schématiques. En réalité, les rugosités (i.e. les « bosses) sont moins hautes et plus « lisses » ou moins chaotiques sur la figure 4.a par rapport à la figure 4.b

Des travaux ont montré que pour les fibres creuses guidant par Couplage-Inhibé, type Kagome ou tubulaire, les pertes peuvent être aussi bas que $10^{-2}$ à $10^{-3}$ dB/km dans la gamme spectrale du Visible à l'UV si la rugosité de surface est fortement réduite.

De même, pour les fibres conventionnelles (ex. fibre pour telecom), réduire la fluctuation de densité peut faire baisser les plus basses pertes actuelles de 0.1 dB/km par un facteur 10.

L'invention adresse donc une problématique capitale pour la fibre optique à cœur creux ou les fibres solides conventionnelles.

Dans un exemple particulier :

- la préforme est en silice à cœur creux avec une gaine microstructurée de type Kagome et a à l'entrée 21 un diamètre externe de 40 mm
- l'enceinte du four 2 est chauffée à 1900°C
- la zone de travail est à une température supérieure à 1200°C
- la préforme 1 est étirée, du côté de la sortie 3, à une vitesse de 15 m/min
- chaque faisceau laser 5 a une longueur d'onde de 1060 nm, avec une fréquence de modulation de 220 Hz entre une puissance maximale de 80 W et une puissance minimale de 30 W.

La fibre optique obtenue a une excellente perte de transmission.

L'invention permet d'obtenir une fibre creuse avec des pertes plus basses que l'état de l'art actuel et consolidera ses applications dans les secteurs comme :

1. Micro-usinage par laser : La fibre obtenue selon la présente invention permet un acheminement flexible et sécurisé de faisceau laser de haut flux.
2. Compression d'impulsion laser : La fibre obtenue selon la présente invention permet de comprimer des impulsions laser par une simple optimisation de la longueur de fibre et le choix du gaz à introduire dans le coeur de la fibre.
3. Chirurgie : La fibre obtenue selon la présente invention permet un acheminement flexible et sécurisé de faisceau laser pour des opérations endoscopiques ou de type Lasik.
4. Traitement de cellule : La fibre obtenue selon la présente invention permet un acheminement flexible et sécurisé de faisceau laser ultra-bref pour détruire de façon ciblée et sans dépôt de chaleur des cellules cancéreuses.

5. Laser à gaz : La fibre obtenue selon la présente invention et dont le coeur est rempli d'un gaz actif permet d'être utilisé comme un milieu de gain laser.

6. Etalon de fréquence : La fibre obtenue selon la présente invention et dont le coeur est rempli d'un gaz (e.g. acétylène , vapeur Rb ou Cs) permet d'être utilisée comme un étalon de fréquence.

7. Imagerie THZ : Le guide THZ obtenu selon la présente invention permet un acheminement flexible et sécurisé de radiation THZ, et de collecte de radiation THZ pour l'imagerie.

8. Guide d'onde pour le THZ et le micro-onde : Le guide obtenu selon la présente invention permet un guidage THZ et/ou micro-onde monomodal et à faibles pertes de transmission.

9. Télécommunication « low latency » dans les « data centres ».

On note que dans l'ensemble des modes de réalisation venant d'être décrits, chaque faisceau 5 n'est pas un faisceau laser pulsé mais un faisceau laser continu modulé en puissance.

La puissance de chaque faisceau laser 5, $P$, est donnée en fonction du temps t par :

$$P = P_0 + P_m \sin(2\pi v_{mod} t)$$

Ici, $v_{mod}$ est la fréquence de modulation de la puissance du laser.

$P_0$ représente la partie continue ou DC.

$P_m$ est la partie de la puissance modulée.

L'expression de P en fonction de la puissance totale ( ou maximum) s'écrit aussi sous la forme

$$P = P_T[1 - \frac{P_m}{P_T}\left(1 - \sin(2\pi v_{mod} t)\right)]$$

Le ratio $\frac{P_m}{P_T}$ représente la profondeur de modulation ( modulation depth).

La transmission dans la fibre optique 1 est limitée par la diffusion de lumière induite par des fluctuations de densité du verre qui sont dues à la « congélation » d'ondes thermiques quand la fibre 1 sort de la fournaise 31, et où la matière constitutive de la fibre 1 passe d'une phase viscoélastique (s'apparentant à une phase liquide hautement visqueux) dans la fournaise 31 à une phase solide en dehors. Ici, les ondes thermiques sont des ondes de surface, et sont appelées ondes de capillaires (capillary waves (CW) en anglais).

Pour la suite, on utilisera de préférence l'abréviation CW pour « onde capillaire ».

Ces CW gelées sont une source derrière la formation d'une rugosité de surface sur les parois d'une fibre 1 à cristal PCF à cœur creux (HCPCF). Cette rugosité de surface dans les HCPCF est un facteur limitant dans la transmission de ces fibres à travers le phénomène de pertes de transmission par diffusion de surface.

Ainsi, dans les présents modes de réalisation de l'invention, on contrôle les ondes capillaires en restructurant leur amplitude, fréquence et amortissement par la génération d'autres ondes capillaires via un phénomène photoélastique.

On utilise un laser pour exciter le phénomène photoélastique pendant que la fibre est en phase «liquide », et pour créer des interférences destructives avec les ondes capillaires d'origine thermodynamique et/ou remodeler la surface suivant profile souhaité.

La figure 6 schématise une rugosité de surface. Celle-ci est présentée par l'élévation de la hauteur (en fonction des coordonnées spatiales x et z définissant un plan) d'un milieu liquide ou viscoélastique, $h(x, z) = h_0 + \Sigma_i \zeta_i(x, z)e^{-i(q_i z - \omega_i t)}$, induite par des ondes capillaires. Ici $h_0$ est la hauteur statique du milieu, et le deuxième terme du membre droit de l'équation représente une combinaison linéaire de plusieurs ondes capillaires. Chaque CW est déterminée par son amplitude $\zeta_i(x, z)$, sa fréquence d'oscillation $\omega i$, et son vecteur d'onde $q_i$ dans la direction $z$.

Fréquence

Pour une membrane d'épaisseur $h$ très mince, la pulsation $\omega(q)$ (fréquence d'oscillation au facteur 2n près)et le vecteur d'onde q sont reliés par l'équation de dispersion suivante:

$$\omega(q) = \sqrt{\frac{\gamma h}{\rho}} q^2,$$

avec $\gamma$ et $\rho$ étant la tension de surface et la densité de la membrane, respectivement. Ici nous avons négligé la contribution du gaz (ex. air) dont la densité de l'air et la tension de surface est faible relativement à ceux de la membrane.

Cette expression est valable pour le cas d'une membrane fine, où l'effet de gravité peut être négligé devant la tension de surface. Aussi, l'amplitude de vecteur d'onde appartient à un intervalle donné par les inégalités suivantes :

$$q_v = \sqrt{\frac{\rho g}{\gamma}} \ll q \ll q_h = h^{-1},$$

Ici, $\gamma$ est la tension de surface, et $g$ est l'accélération de la gravité. Pour le cas du verre, on a $q_v \sim 271 m^{-1}$ ( i.e. longueur d'onde $\lambda_v \sim 2.3 cm$) et $q_h \sim 10^6 m^{-1}$ ( i.e. longueur d'onde $\lambda_h \sim 1 \mu m$ qui est donnée par l'épaisseur de la membrane) pour une membrane de verre de $1 \mu$m d'épaisseur. Ceci donne l'intervalle suivant pour les fréquences d'oscillation d'une CW dans une membrane de verre :

$$(2\pi) \times 8 Hz \ll \omega \ll (2\pi) \times 2\ MHz,$$

Ce calcul peut évidemment être appliqué à d'autres matériaux.

Amplitude

Quant à l'amplitude de chaque mode du CW, elle est donnée par l'expression approximative suivante, pour excitation thermodynamique (c.à.d. induite par la fluctuation thermodynamique de la température) :

$$\langle \zeta_i(q_i, \omega_i) \rangle = \sqrt{\frac{k_B T}{\gamma q_i^2 + \rho g}} \approx \sqrt{\frac{k_B T}{\gamma q_i^2}},$$

Pour le cas de la silice, la température T de travail est comprise entre 1734°C et 2354°C. $k_B$ est la constante de Boltzmann.

Par conséquent l'amplitude d'une CW se situe dans les intervalles suivants :

$$0.7\ pm \ll \langle \zeta_v(q_v, \omega_v) \rangle \ll 0.8\ m,$$

Pour la limite basse des vecteurs d'ondes, et

$$0.0002\ pm \ll \langle \zeta_h(q_h, \omega_h) \rangle \ll 0.0003\ pm,$$

pour la limite hautes des vecteurs d'ondes.

Les résultats montrent que les modes avec des fréquences basses ont les plus fortes amplitudes. Aussi, pour avoir un ordre de grandeur des élévations de surface sur un point donné, que ces CW induisent, nous devons intégrer $\zeta_i(q_i, \omega_i)$ sur une partie de l'intervalle $[q_v, q_h]$. Ceci donne une élévation moyenne de $\Delta h_{CW} = \sqrt{\frac{k_B T}{4\pi\gamma} ln\left(\frac{q_h}{q_v} + 1\right)} \approx 200\ pm$ pour T= 1734°C, et $\Delta h_{CW} \approx 250\ pm$ pour T=2354°C. Ces valeurs sont typiques des mesures obtenues sur les surfaces des HCPCF.

Ce calcul peut évidemment être appliqué à d'autres matériaux.

Amortissement

Une autre propriété importante des CW est leur taux décroissance. En fait, suivant les conditions d'excitation ou aux conditions aux limites les CW sont propagatrice ou purement évanescente (pas d'oscillations). Dans les deux cas, une CW est amortie avec le temps de relaxation suivant :

$$\tau_q = \frac{\rho}{2\eta}\frac{1}{q^2}$$

Ici $\eta$ est la viscosité du milieu (membrane). Celle dépend de la température pour le cas d'un verre en fusion. Par exemple pour le verre de la silice, $\eta = 10^3 Pa.s$ pour T=2354°C et $\eta = 10^{6.2} Pa.s$ pour T=1734°C. Reprenons la même que ci-dessous, nous retrouvons les intervalles suivant pour $\tau_q$ :

$$0.02\mu s \ll \tau_v \ll 30\ \mu s,$$

pour les modes à basses fréquences, et

$$1 fs \ll \tau_h \ll 2\ ps,$$

pour les modes à hautes fréquences.

Ce calcul peut évidemment être appliqué à d'autres matériaux.

Au vu de ces intervalles des amplitudes et des temps de relaxations des CW, les modes à basses fréquences dominent dans la formation de rugosité. En conséquence, on peut construire le tableau suivant des valeurs typiques des longueurs d'onde, fréquence, amplitude et temps de relaxation, en fixant l'intervalle utile des vecteurs d'onde $q$ à [$q_v$ $100q_v$] :

| Propriétés typique d'une CW dans une membrane de silice de 1µm d'épaisseur et pour des température entre 1734°C et 2453°C | | | |
|---|---|---|---|
| Longueur d'onde | Fréquence d'oscillations | amplitude | Temps d'amortissement |
| 0.2-23mm | 10Hz-8kHz | .01pm-0.1 pm | 3ns-30µs |

Les valeurs ci-dessus (dont le calcul peut évidemment être refait pour d'autres matériaux) ont été obtenu pour la silice, en prenant les valeurs thermomécaniques du tableau ci-dessous :

| Propriétés thermomécaniques de la silice à 1734°C - 2453°C | |
|---|---|
| Densité ($\rho$ ($kg$.m$^{-3}$)) | 2201 |
| Coefficient d'expansion thermique ($\alpha_{th}$ (K$^{-1}$)) | 4.8x10$^{-7}$ |
| Conductivité thermique ($\kappa$ (Wm$^{-1}$K$^{-1}$)) | 2.7 |
| Capacité calorifique (C$_p$ (J/Kg.K) | 1052 |
| Viscosité($\eta$ (Pa.s)) | 10$^{6.2}$@1734°C, |
| Tension de surface($\gamma$ ($J$.m$^{-2}$)) | 10$^3$@2453°C |
| | 0.3 @1231°C |

La dynamique des CW est générée par bruit thermique. Les CW peuvent être contrôlées si une excitation externe (de chaque faisceau 5) judicieusement choisie est appliquée. Ceci peut être montré à travers l'évolution temporelle d'une CW en présence d'une excitation $F(t)$ décrit dans l'équation suivante :

$$\frac{\partial \zeta_i(x,z)}{\partial t} + \frac{\zeta_i(x,z)}{\tau_{q_i}} = T(x,z) + F(t)$$

Ici, $T(x, z)$ représente la force induite par le bruit thermodynamique cité plus haut. Si on se met dans des conditions telles que $T(x, z) \ll F(t)$, cette équation se réduit à celle de l'oscillation d'un harmonique amortie forcé. Avec une excitation de $F(t) \propto Fcos(\omega t + \varphi)$, avec le bon choix de, $F$, pulsation $\omega$ et de phase $\varphi$, on peut contrôler le mouvement oscillatoire pour accélérer/décélérer son ralentissement, réduire fortement son amplitude ou restructurer le profile de surface.

$\tau_{q_i}$ est temps de relaxation de l'onde capillaire i pour le matériau considéré, par exemple de la silice.

De façon similaire, les conditions aux limites des CW peuvent être contrôler ou modifier avec le profile et l'extension spatiale de l'excitation externe, et par conséquent donner un profile particulier à la rugosité.

En particulier, avec un dimensionnant judicieusement l'extension spatiale de l'excitation, son amplitude *F* et sa fréquence de modulation, on peut structurer la surface de telle façon qu'une CW domine le reste des ondes capillaires et que la position finale de l'excitation corresponde au creux de l'amplitude de la CW dominante. Le résultat est une surface plus plate que celle d'une surface générée par le bruit thermodynamique.

Ce sont ces deux leviers de contrôle, à savoir l'extension spatiale de l'excitation et son amplitude et sa fréquence de modulation, que l'invention peut exploiter.

Selon l'invention, pour générer l'excitation externe pour contrôler les CW dans l'intérieur ou sur la surface d'un milieu viscoélastique, on peut se repose sur la combinaison de deux phénomènes physiques. Le premier est l'effet photo-thermique et, le second l'effet thermoélastique. A noter que ces phénomènes sont différents de ceux associés avec l'inscription d'un réseau de Bragg dans les fibres (ex. photo-sensibilité), qui implique une restructuration électronique. Ce qui contraste avec les phénomènes de photo-thermique et photoélastique est le fait que ces derniers n'impliquent pas de changement d'indice ou électronique du milieu. Par exemple, le milieu 1 doit montrer un niveau de viscoélasticité à même de réaliser le contrôle des CW souhaité ; ceci est une différence majeure pour les techniques d'inscription de réseaux de Bragg.

L'effet photo-thermique implique une fluctuation de température thermodynamique induite par photo-absorption. Cette fluctuation est induite par la fluctuation intrinsèque de la lumiere (i.e. « shot-noise »). En parallèle, l'effet thermoélastique implique une déformation géométrique (ex. changement de longueur) induite par un changement de température, via le phénomène de thermoélasticité, elle-même, induite par photo-absorption d'expansion thermique. Autrement dit nous avons $\Delta h/h = \alpha_{th}\Delta T$, avec, $\alpha_{th}$ étant le coefficient de dilatation, $\Delta T$ le changement de température et $\Delta h/h$ le changement relative de la longueur du milieu. Pratiquement, la variation de température est une modulation de température, qui peut être réalisée par photo-absorption du laser 5 modulé en puissance. Ceci, peut être formulé comme une modulation du changement de longueur : $\Delta h/h \propto \alpha_{th}P_{abs}\cos(2\pi\nu_{mod}t)$, ou $P_{abs}$ est la puissance du laser absorbé par le milieu. L'amplitude de la déformation de surface induite par l'effet photo-thermique dans le cas d'un laser collimaté ( non focalisé) , modulé en puissance à la fréquence $\nu_{mod}$ et en incidence normale sur la surface , peut être quantifiée par sa fonction de réponse ( en unité de longueur), donnée ci-dessous :

$$h_{PT}(\nu) = \frac{\sqrt{2}}{\pi}\frac{\alpha_{th}}{\kappa}(1+\sigma)\begin{cases}\langle P_{abs}\rangle\,\dfrac{\nu c}{\nu} & si\ \nu \gg \nu c \\[2mm] \langle P_{abs}\rangle & si\ \nu \ll \nu c\end{cases}$$

Ici les quantités $\alpha_{th}$, $\kappa$ et $\sigma$ sont respectivement le coefficient de dilation, la conductivité thermique et le ratio de Poisson du milieu (ex. verre) respectivement. $\nu c = (2\pi)^{-1}\sqrt{\kappa/\rho C w_0{}^2}$ , avec $\rho$ et $C$ étant respectivement la densité et la capacité calorifique du milieu chauffé et $w_0$ le rayon effectif du laser 5. Pour la silice, cette fréquence de coupure s'écrit comme $\nu c = 2 Hz \frac{100\mu m}{w_0}$ , soit une fréquence de coupure de 2Hz pour un laser de diamètre effectif de 200 $\mu m$. $\langle P_{abs}\rangle$ est la puissance moyenne du laser absorbée par le préforme étirée. Celle-ci est déterminée par à la fois par le coefficient d'absorption du milieu à longueur d'onde du laser, et des paramètres de $P_0$ , $\frac{P_m}{P_T}$ cités plus haut. Ici, les temps caractéristiques de la photo-absorption sont beaucoup plus rapide pour considérer que la fréquence de modulation ne soit affectée par la valeur de $\langle P_{abs}\rangle$. Ceci nous donne

$$\langle P_{abs}\rangle = \alpha_{abs}\sqrt{P_O{}^2 + \frac{P_m{}^2}{2}}$$

Nous notons qu'en cas de profondeur de modulation maximale (i.e. $P_O = 0$, et $P_m = P_T$), on a $\langle P_{abs}\rangle = \alpha_{abs}P_m/\sqrt{2}$ . Alors que pour une petite modulation $\frac{P_m}{P_T}\sim 0$ , on a $\langle P_{abs}\rangle = \alpha_{abs}P_0$. En conséquence, en cas de non modulation on a une déformation constante et « statique » de

$$h_0 \approx \sqrt{S_{PT}(\nu \to 0)} \approx \frac{1}{\pi}\left(\frac{\alpha_{th}}{\kappa}\right)(1+\sigma)\alpha_{abs}P_0$$

Afin que cette déformation domine celle induite par les CW, nous devons avoir

$$h_0 \geq \Delta h_{CW}$$

Cette inégalité fixe des contraintes sur la puissance du laser donnée par

$$P_0 \geq \frac{\pi \kappa}{\alpha_{th(1+\sigma)} \alpha_{abs}} \Delta h_{CW}.$$

En reprenant le cas d'une membrane de verre de silice donné plus haut, nous trouvons

$$P_0 \geq 45W,$$

Pour un coefficient d'absorption de 100 ppm.
Quand le laser est modulé en puissance à des fréquences supérieures a *vc*, la déformation s'écrit

$$\Delta h \approx h_0 \frac{vc}{v} \sqrt{1 + \left(\frac{P_m}{P_T}\right)^2 \left(1 - \frac{P_m}{P_T}\right)^{-2}}$$

L'expression ci-dessous montre le rôle de la fréquence, *v*, et de la profondeur de modulation $\frac{P_m}{P_T}$, dans le contrôle de la surface. Enfin, nous voyons que l'impact de la valeur de la fréquence de modulation est déterminé par *vc*. La fréquence *vc* est relié au temps de relaxation thermique d'une excitation induite par le phénomène photoélastique, ou encore à la longueur de diffusion thermique.

$$\tau_c = 2\pi v_c^{-1}$$

Ce qui donne un temps de relaxation pour la silice de $\tau_c \approx 3s \frac{w_0}{100\mu m}$. Cette formule montre le role de la taille du faisceau laser dans la relaxation des ondes thermiques générées par photoélasticité. A noter, que la longueur de diffusion est indépendante de $w_0$, comme le montre la formule ci-dessous :

$$L_{th} = \sqrt{\frac{\kappa}{\rho C \, v}} = w_0 \sqrt{\frac{v_c}{v}}$$

La longueur de diffusion $L_{th}$ ne peut être contrôlée que par la fréquence de modulation. Pour le verre de silice nous avons $L_{th} \sim 30 \mu m$ pour une fréquence de modulation of 1KHz, et $L_{th} \sim 300 \mu m$ pour une fréquence de modulation de 10Hz. Par conséquent, la fréquence de modulation peut être utilisée comme moyen de contrôler $L_{th}$ (i.e. l'étendue spatiale de la CW générée) sans affecter l'amortissement de l'onde capillaire.
Le tableau suivant donne l'impact des paramètres du laser sur la structuration de la surface.

| L'impact des paramètres lasers sur le contrôle du profile de surface | |
|---|---|
| **Puissance** continue ($P_0$) | 1. Profile primaire de la surface (longue portée) |
| Fréquence de modulation (v) | 1. Excitation sélective des CWs à courte portée<br>2. Contrôle de la longueur de diffusion |
| Profondeur de modulation | 1. Contrôle de l'amplitude des CWs à courte portée |
| Taille de faisceau | 1. Contrôle du temps de relaxation des CWs<br>2. Contrôle des conditions au limites des CWs ( i.e. contrôle des phases des CWs) |
| Distance laser-fournaise | 1. S'ajuster par rapport à l'état viscoélastique des CWs induite par bruit thermodynamique dans la fournaise thermique.<br>2. Contrôle des conditions au limites des CWs ( i.e. contrôle des phases des CWs) |

Nous arrivons à un point où nous pouvons dégager les conditions d'opération pour façonner la surface d'un verre soumis à des CW induites par bruit thermique (généralisable à une volume). Dimensionner l'invention pour structurer la surface peut être réalisée en établissant une hiérarchisation entre les temps caractéristiques (i.e. de façon équivalente : les longueurs caractéristiques) associés au différents effets sous-jacents la génération des CWs par bruit thermique dans la fournaise et leur contrôle par excitation photonique. Ci-dessous, un tableau récapitulant les temps caractéristiques dans

| L'impact des paramètres lasers sur le contrôle du profile de surface | | | |
|---|---|---|---|
| **Temps caractéristique** | **Phénomène associé** | **Expression** | **Intervalle** |
| Temps de refroidissement ($\tau_{cool}$) | Le temps de refroidissement d'un verre chauffé en sortie de la fournaise | $\dfrac{\rho C_p}{\kappa} \dfrac{V}{A} 2w_0$ | 1ms-60ms |
| Temps d'interaction laser-matière ($\tau_{int}$) | Le temps d'interaction avec le laser d'un verre (ex. fibre) en mouvement uniforme à une vitesse $v_d$ | $\dfrac{2w_0}{v_d}$ | 100$\mu$s-10ms |
| Temps de modulation laser-matière ($\tau_{las}$) | Le temps associé à la modulation de puissance du laser | $\dfrac{1}{v_{mod}}$ | 1ms-10s |
| Temps de relaxation thermique ($\tau_{therm}$) | Le temps de refroidissement d'un verre chauffé par photo-absorption | $\dfrac{\rho C_p}{\kappa} w_0{}^2$ | 8ms-3s |
| Temps de corrélation d'une CW ($\tau_{CW}$) | Le temps associé à la longueur de corrélation d'une CW. | $\dfrac{\sqrt{\gamma/g\rho}}{c_s}$ | 0.7$\mu$s-1 $\mu$s |
| $V$ et $A$ volume et l'aire longitudinale de verre chauffé par la fournaise thermique. $c_s$ vitesse du son de le verre chauffé. $v_d$ vitesse de l'étirage du verre à la sortie de la fournaise thermique. Voir texte pour les autres paramètres. | | | |

Ci-dessous les différentes conditions d'opération :

| Conditions d'opération pour le façonnage de la surface | |
|---|---|
| **Description de la condition** | **Condition sur les paramètres du dispositif** |
| L'amplitude de CW dominante induite par photoélasticité doit être supérieure à l'amplitude de CW dominante par bruit thermique. Cette condition est imposée pour pouvoir façonner la surface par photoélasticité. | $P_0 \geq 45W$ |
| La distance fournaise-faisceau laser, $d$, doit être suffisamment courte pour que la température de la fibre à la sortie de la fournaise, $T_h$, reste supérieure à la température de ramollissement (« softening température »). Une condition pour avoir les CW induites dans la fournaise restent dynamique et ne sont pas solidifiées (ou « congelées »). | $d \leq v_d \tau_{cool} \ln\left(\dfrac{T_h}{T_{soft}}\right)$ <br> Pour silice <br> $d \leq 10\ mm$ pour $v_d$ = 10 $m/min$ |
| Le temps de passage de la fibre/préforme dans le faisceau laser doit être suffisamment long pour que le phénomène de photoélasticité s'établisse sur tout le volume du verre « trompé » dans le faisceau laser. | $\tau_{int} \geq max(\tau_{las},\ \tau_{therl})$ |

(suite)

| Conditions d'opération pour le façonnage de la surface | |
|---|---|
| **Description de la condition** | **Condition sur les paramètres du dispositif** |
| Une des stratégies pour amortir l'amplitude des CWs induites par bruit thermique dans la fournaise, est de les « neutraliser » par interférence avec les CWs générées par photoélasticité. Ceci implique que l'intervalle de fréquence les CWs induite par photoélasticité soit le même que celui des CWs induites par bruit thermique. Ceci, en conséquence, détermine un intervalle pour la fréquence de modulation du laser. | $\nu_{mod}$ <br><br> $\in 2\pi^{-1} \; g \; \left[ \overline{\sqrt{\dfrac{\rho h}{\gamma}}}, \; \overline{\sqrt{\dfrac{\gamma}{\rho h^3}}} \right]$ <br><br> Pour silice <br> $v_{mod} \in [10Hz,\ 8KHz]$ |
| Une autre stratégie pour aplatir la rugosité est d'exploiter les propriétés ondulatoires des CW et leurs conditions au limites pour fixer leur | $q_{cw} \times 2w_0 = (2n+1)\pi$ <br> Pour la CW dominante |
| amplitude à zéro en superposant la position de la vallée d'une CW avec le bord de la zone du faisceau laser. <br><br><br> Cette condition peut être réalisée en contrôlant le diamètre du laser (voir ci-contre) et/ou la position de ce dernier. | $2w_0 \; \overline{\sqrt{\dfrac{\rho g}{\gamma}}} = (2n+1)\pi$ <br><br> (ici *n* un entier) <br> Pour la silice <br> $2w_0 = (2n+1) \times 11mm$ |

Tous ces calculs de toute la description peuvent évidemment être refaits pour d'autres matériaux.

Bien sûr, l'invention n'est pas limitée aux exemples qui viennent d'être décrits et de nombreux aménagements peuvent être apportés à ces exemples sans sortir du cadre de l'invention.

Dans une variante, la préforme 1 n'est pas creuse ou microstructurée mais peut être une fibre de verre pleine.

Bien entendu, les différentes caractéristiques, formes, variantes et modes de réalisation de l'invention peuvent être associées les unes avec les autres selon diverses combinaisons dans la mesure où elles ne sont pas incompatibles ou exclusives les unes des autres.

**Revendications**

1. Procédé de fabrication d'une fibre optique, dans lequel :

    - on insère une préforme (1) dans un four (2),
    - on étire la préforme par une sortie (3) du four, et
    - on soumet une zone de travail (4) de la préforme ainsi étirée à au moins un faisceau laser (5), chaque faisceau laser étant modulé en puissance selon une fréquence de modulation

    **caractérisé en ce que** :

    - chaque faisceau laser est modulé en puissance selon une fréquence de modulation supérieure à 10Hz et inférieure à 1000 kHz,
    - chaque faisceau laser a une puissance supérieure à 10 W,
    - la zone de travail est à une température supérieure à une température de ramollissement ou de transition vitreuse du matériau composant la préforme,
    - la partie (8) du front d'onde de chaque faisceau laser entrant en contact de la zone de travail a, à chaque instant donné, une densité spatiale de puissance comprise entre un maximum et 80% de ce maximum.

2. Procédé selon la revendication 1, **caractérisé en ce que** la fréquence de modulation est inférieure à 10 kHz.

3. Procédé selon la revendication 1 ou 2, **caractérisé en ce que** chaque faisceau laser est modulé entre une puissance maximale (6) et une puissance minimale de telle façon que la valeur de puissance minimale est comprise entre 95% de la puissance maximale et 0% de la puissance maximale.

4. Procédé selon la revendication 3, **caractérisé en ce que** chaque faisceau laser est modulé sur un intervalle (9) allant de la puissance maximale jusqu'à au moins 50% de cette puissance maximale.

5. Procédé selon la revendication 4, **caractérisé en ce que** chaque faisceau laser est modulé sur un intervalle allant de la puissance maximale jusqu'à au moins 10% de cette puissance maximale.

6. Procédé selon l'une quelconque des revendications précédentes, **caractérisé en ce que** chaque faisceau laser est modulé en puissance selon une fréquence de modulation supérieure à 100Hz.

7. Procédé selon l'une quelconque des revendications précédentes, **caractérisé en ce que** l'au moins un faisceau laser comprend plusieurs faisceaux laser se croisant sur la zone de travail.

8. Procédé selon l'une quelconque des revendications précédentes, **caractérisé en ce que** chaque faisceau laser a une longueur d'onde supérieure à 200 nm et/ou inférieure à 12 $\mu$m.

9. Procédé selon l'une quelconque des revendications précédentes, **caractérisé en ce que** chaque faisceau laser est collimaté sur la zone de travail.

10. Procédé selon l'une quelconque des revendications précédentes, **caractérisé en ce que** la préforme est une préforme en verre.

11. Procédé selon l'une quelconque des revendications précédentes, **caractérisé en ce que** la zone de travail de la préforme étirée comprend une structure composée de parois (7) dont l'épaisseur est inférieure à 10$\mu$m, de préférence inférieure à 3 $\mu$m, de préférence inférieure à 1 $\mu$m.

12. Procédé selon l'une quelconque des revendications précédentes, **caractérisé en ce que** la zone de travail est située en dehors du four.

13. Procédé selon l'une quelconque des revendications précédentes, **caractérisé en ce que** le four comprend :

   - une enceinte traversée par la préforme, et
   - une source de chaleur disposée dans l'enceinte et élevant la température à l'intérieur de l'enceinte, la zone de travail étant située à une distance inférieure à 10 cm de la source de chaleur.

14. Procédé selon l'une quelconque des revendications précédentes, **caractérisé en ce que** la zone de travail est à une température supérieure à 1000°C, de préférence supérieure à 1500 °C.

15. Dispositif de fabrication d'une fibre optique, comprenant :

   - un four (2)
   - une entrée pour insérer une préforme (1) dans le four (2),
   - des moyens pour étirer la préforme par une sortie (3) du four, et
   - des moyens d'émission agencés pour soumettre une zone de travail (4) de la préforme ainsi étirée à au moins un faisceau laser (5), et des moyens de modulation agencés pour moduler chaque faisceau laser en puissance selon une fréquence de modulation

   **caractérisé en ce que** :

   - les moyens de modulation sont agencés pour que chaque faisceau laser soit modulé en puissance selon une fréquence de modulation supérieure à 10Hz et inférieure à 1000 kHz,
   - les moyens d'émission sont agencés pour que chaque faisceau laser a une puissance supérieure à 10 W,
   - les moyens d'émission et le four sont agencés pour que la zone de travail soit à une température supérieure à une température de ramollissement ou de transition vitreuse du matériau composant la préforme,
   - les moyens d'émission sont agencés pour que la partie du front d'onde de chaque faisceau laser entrant en contact de la zone de travail a, à chaque instant donné, une densité spatiale de puissance comprise entre un maximum et 80% de ce maximum.

**Patentansprüche**

1. Verfahren zur Herstellung einer optischen Faser, wobei

   - ein Vorformling (1) in einen Ofen (2) eingebracht wird,
   - der Vorformling durch einen Auslass (3) aus dem Ofen gezogen wird und
   - ein Arbeitsbereich (4) des so gezogenen Vorformlings mindestens einem Laserstrahl (5) ausgesetzt wird, wobei jeder Laserstrahl mit einer Modulationsfrequenz leistungsmoduliert wird,

   **dadurch gekennzeichnet, dass**

   - jeder Laserstrahl mit einer Modulationsfrequenz von mehr als 10 Hz und weniger als 1000 kHz leistungsmoduliert wird,
   - jeder Laserstrahl eine Leistung von mehr als 10 W aufweist,
   - der Arbeitsbereich sich auf einer Temperatur befindet, die höher als die Erweichungs- oder Glasübergangstemperatur des Materials ist, aus dem der Vorformling besteht,
   - der Teil (8) der Wellenfront jedes Laserstrahls, der mit dem Arbeitsbereich in Kontakt kommt, jederzeit eine räumliche Leistungsdichte im Bereich zwischen einem Maximum und 80 % dieses Maximums aufweist.

2. Verfahren nach Anspruch 1, **dadurch gekennzeichnet, dass** die Modulationsfrequenz kleiner als 10 kHz ist.

3. Verfahren nach Anspruch 1 oder 2, **dadurch gekennzeichnet, dass** jeder Laserstrahl zwischen einer maximalen Leistung (6) und einer minimalen Leistung moduliert wird, derart, dass der Wert der minimalen Leistung im Bereich zwischen 95 % der maximalen Leistung und 0 % der maximalen Leistung liegt.

4. Verfahren nach Anspruch 3, **dadurch gekennzeichnet, dass** jeder Laserstrahl über ein Intervall (9) von der maximalen Leistung bis zu mindestens 50 % dieser maximalen Leistung moduliert wird.

5. Verfahren nach Anspruch 4, **dadurch gekennzeichnet, dass** jeder Laserstrahl über ein Intervall von der maximalen Leistung bis zu mindestens 10 % dieser maximalen Leistung moduliert wird.

6. Verfahren nach einem der vorstehenden Ansprüche, **dadurch gekennzeichnet, dass** jeder Laserstrahl mit einer Modulationsfrequenz von mehr als 100 Hz leistungsmoduliert wird.

7. Verfahren nach einem der vorstehenden Ansprüche, **dadurch gekennzeichnet, dass** mindestens ein Laserstrahl mehrere Laserstrahlen umfasst, die sich im Arbeitsbereich kreuzen.

8. Verfahren nach einem der vorstehenden Ansprüche, **dadurch gekennzeichnet, dass** jeder Laserstrahl eine Wellenlänge von mehr als 200 nm und/oder weniger als 12 $\mu$m aufweist.

9. Verfahren nach einem der vorstehenden Ansprüche, **dadurch gekennzeichnet, dass** jeder Laserstrahl im Arbeitsbereich kollimiert ist.

10. Verfahren nach einem der vorstehenden Ansprüche, **dadurch gekennzeichnet, dass** der Vorformling ein Glasvorformling ist.

11. Verfahren nach einem der vorstehenden Ansprüche, **dadurch gekennzeichnet, dass** der Arbeitsbereich des gezogenen Vorformlings eine Struktur umfasst, die aus Wänden (7) besteht, deren Dicke weniger als 10 $\mu$m, vorzugsweise weniger als 3 $\mu$m, vorzugsweise weniger als 1 $\mu$m, beträgt.

12. Verfahren nach einem der vorstehenden Ansprüche, **dadurch gekennzeichnet, dass** sich der Arbeitsbereich außerhalb des Ofens befindet.

13. Verfahren nach einem der vorstehenden Ansprüche, **dadurch gekennzeichnet, dass** der Ofen Folgendes umfasst:

    - einen Ofenraum, der von dem Vorformling durchlaufen wird, und
    - eine Wärmequelle, die im Ofenraum angeordnet ist und die Temperatur im Inneren des Ofenraums erhöht, wobei sich der Arbeitsbereich in einem Abstand von weniger als 10 cm von der Wärmequelle befindet.

14. Verfahren nach einem der vorstehenden Ansprüche, **dadurch gekennzeichnet, dass** sich der Arbeitsbereich auf einer Temperatur von über 1000 °C, vorzugsweise über 1500 °C, befindet.

15. Vorrichtung zur Herstellung einer optischen Faser, umfassend:

 - einen Ofen (2),
 - einen Einlass zum Einbringen eines Vorformlings (1) in den Ofen (2),
 - Mittel zum Ziehen des Vorformlings durch einen Auslass (3) aus dem Ofen, und
 - Abstrahlungsmittel, die dafür eingerichtet sind, dass ein Arbeitsbereich (4) des so gezogenen Vorformlings mindestens einem Laserstrahl (5) ausgesetzt wird, und Modulationsmittel, die dafür eingerichtet sind, dass jeder Laserstrahl mit einer Modulationsfrequenz leistungsmoduliert wird,

 **dadurch gekennzeichnet, dass**

 - die Modulationsmittel dafür eingerichtet sind, dass jeder Laserstrahl mit einer Modulationsfrequenz von mehr als 10 Hz und weniger als 1000 kHz leistungsmoduliert wird,
 - die Abstrahlungsmittel dafür eingerichtet sind, dass jeder Laserstrahl eine Leistung von mehr als 10 W aufweist,
 - die Abstrahlungsmittel und der Ofen dafür eingerichtet sind, dass sich der Arbeitsbereich auf einer Temperatur befindet, die höher als die Erweichungs- oder Glasübergangstemperatur des Materials ist, aus dem der Vorformling besteht,
 - die Abstrahlungsmittel dafür eingerichtet sind, dass der Teil der Wellenfront jedes Laserstrahls, der mit dem Arbeitsbereich in Kontakt kommt, jederzeit eine räumliche Leistungsdichte im Bereich zwischen einem Maximum und 80 % dieses Maximums aufweist.

## Claims

1. Method for manufacturing an optical fibre, in which:

 - a preform (1) is inserted into a furnace (2),
 - the preform is drawn via an outlet (3) of the furnace, and
 - at least one laser beam (5) is applied to a working zone (4) of the thus-drawn preform, each laser beam being power-modulated according to a modulation frequency

 **characterized in that**:

 - each laser beam is power-modulated according to a modulation frequency greater than 10 Hz and/or less than 1000 kHz
 - each laser beam has a power greater than 10 W
 - the working zone is at a temperature above a softening or vitreous transition temperature of the material constituting the preform
 - the part (8) of the wavefront of each laser beam coming into contact with the working zone has, at each given instant, a spatial power density comprised between a maximum and 80% of this maximum.

2. Method according to claim 1, **characterized in that** the modulation frequency less than 10 kHz.

3. Method according to claim 1 or 2, **characterized in that** each laser beam is modulated between a maximum power (6) and a minimum power such that the minimum power value is comprised between 95% of the maximum power and 0% of the maximum power.

4. Method according to claim 3, **characterized in that** each laser beam is modulated over an interval (9) ranging from the maximum power to at least 50% of this maximum power.

5. Method according to claim 4, **characterized in that** each laser beam is modulated over an interval ranging from the maximum power to at least 10% of this maximum power.

6. Method according to any one of the preceding claims, **characterized in that** each laser beam is power-modulated according to a modulation frequency greater than 100 Hz.

7. Method according to any one of the preceding claims, **characterized in that** the at least one laser beam comprises several laser beams crossing one another on the working zone.

8. Method according to any one of the preceding claims, **characterized in that** each laser beam has a wavelength greater than 200 nm and/or less than 12 $\mu$m.

9. Method according to any one of the preceding claims, **characterized in that** each laser beam is collimated onto the working zone.

10. Method according to any one of the preceding claims, **characterized in that** the preform is a glass preform.

11. Method according to any one of the preceding claims, **characterized in that** the working zone of the drawn preform comprises a structure composed of walls (7) the thickness of which is less than 10 $\mu$m, preferably less than 3 $\mu$m, preferably less than 1 $\mu$m.

12. Method according to any one of the preceding claims, **characterized in that** the working zone is situated outside the furnace.

13. Method according to any one of the preceding claims, **characterized in that** the furnace comprises:

    - an enclosure through which the preform passes, and
    - a heat source arranged in the enclosure and raising the temperature inside the enclosure, the working zone being situated at a distance less than 10 cm from the heat source.

14. Method according to any one of the preceding claims, **characterized in that** the working zone is at a temperature above 1000°C, preferably above 1500°C.

15. Device for manufacturing an optical fibre, comprising:

    - a furnace (2)
    - an inlet for inserting a preform (1) into the furnace (2),
    - means for drawing the preform via an outlet (3) of the furnace, and
    - emission means arranged to apply to a working zone (4) of the thus-drawn preform, at least one laser beam (5), and modulation means arranged to power-modulate each laser beam according to a modulation frequency

    **characterized in that**:

    - the modulations means are arranged so that each laser beam is power-modulated according to a modulation frequency greater than 10 Hz and/or less than 1000 kHz
    - the emission means are arranged so that each laser beam has a power greater than 10 W
    - the emission means and the furnace are arranged so that the working zone is at a temperature above a softening or vitreous transition temperature of the material constituting the preform,
    - the emission means are arranged so that the part of the wavefront of each laser beam coming into contact with the working zone has, at each given instant, a spatial power density comprised between a maximum and 80% of this maximum.

FIG. 1

FIG. 2

FIG. 3

FIG. 4a

FIG. 4b

FIG. 4

FIG. 5

$$h(x,z) = h_0 + \sum_i \zeta_i(x,z)e^{-i(q_i x - \omega_i t)}$$

Gaz

Milieu liquide ou
viscoélastique

$h(x,z)$

$h_0$

FIG.6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1319636 A
- EP 0649007 A
- GB 2213142 A
- US 5992181 A

**Littérature non-brevet citée dans la description**

- **PJ ROBERTS et al.** *OPTICS EXPRESS 236*, 10 January 2005, vol. 13